## Europäisches Patentamt
## European Patent Office
## Office européen des brevets

(19)

(11) Veröffentlichungsnummer: **0 052 257 B1**

## (12) EUROPÄISCHE PATENTSCHRIFT

(45) Veröffentlichungstag der Patentschrift:
22.04.87

(51) Int. Cl.⁴: **G 01 G 3/14, G 01 L 1/22**

(21) Anmeldenummer: **81108780.8**

(22) Anmeldetag: **23.10.81**

(54) **Elektromechanischer Biegekraftaufnehmer, insbesondere für Wägezellen.**

(30) Priorität: **15.11.80 DE 3043139**

(43) Veröffentlichungstag der Anmeldung:
**26.05.82 Patentblatt 82/21**

(45) Bekanntmachung des Hinweises auf die Patenterteilung:
**22.04.87 Patentblatt 87/17**

(84) Benannte Vertragsstaaten:
**AT BE CH DE FR GB IT LI NL SE**

(56) Entgegenhaltungen:
**DE - A - 1 698 108**
**DE - B - 1 208 910**
**US - A - 3 411 361**

(73) Patentinhaber: **Bizerba-Werke Wilhelm Kraut GmbH & Co. KG., Wilhelm-Kraut-Strasse 41, D-7460 Balingen 1 (DE)**

(72) Erfinder: **Jetter, Hans, Dr.-Ing., Sonnenbergstrasse 54, D-7460 Balingen 1 (DE)**

(74) Vertreter: **Hoeger, Stellrecht & Partner, Uhlandstrasse 14c, D-7000 Stuttgart 1 (DE)**

**Beschreibung**

Die Erfindung betrifft einen elektromechanischen Biegekraftaufnehmer, insbesondere für Wägezellen, mit wenigstens einem elektromechanischen Wandlerelement in Gestalt eines Dehnungsmessstreifens, der in einer nutenförmigen Aussparung eines mit der zu messenden Kraft belastbaren, vorzugsweise stabförmigen Biegekörpers angeordnet und gegen Umwelteinflüsse durch eine hermetische Abdeckung geschützt ist.

Bei einem bekannten Biegekraftaufnehmer dieser Art (US-PS 3 411 361) liegen die Abdeckungen an der Aussenseite eines Biegekörpers mit rechteckigem Querschnitt. Diese äusseren Abdeckungen haben unerwünschte, nicht lineare Einflüsse, durch die das Messergebnis verfälscht werden kann. Die Abdeckungen können auch wegen unterschiedlicher Temperatur-Ausdehnungskoeffizienten mit Bezug auf den Biegekörper ein unterschiedliches Temperaturverhalten zeigen, was ebenfalls zu einer unerwünschten Verfälschung des Messergebnisses führen kann.

Derartige Störeinflüsse wirken sich insbesondere bei für eine relativ niedrige Belastung bestimmten, stabförmigen Biegekörpern im Belastungsbereich unterhalb zwanzig Kilogramm auf die Genauigkeit negativ aus.

Es ist Aufgabe der Erfindung, an einem gattungsgemässen Biegekraftaufnehmer die Abdeckung so auszubilden, dass sie das Messergebnis praktisch nicht beeinflusst.

Die Aufgabe wird erfindungsgemäss dadurch gelöst, dass der oder die Dehnungsmessstreifen durch eine in der biegeneutralen Zone liegende Folie hermetisch abgedeckt sind.

Die nachstehende Beschreibung bevorzugter Ausführungsbeispiele dient im Zusammenhang mit beiliegender Zeichnung der weiteren Erläuterung der Erfindung. Es zeigen:

Fig. 1 halbschematisch eine teilweise geschnittene Seitenansicht eines Biegestabes;

Fig. 2 eine Untenansicht des Biegestabes aus Fig. 1 in Richtung des Pfeiles A;

Fig. 3 eine vergrösserte Schnittdarstellung entlang der Linie 3–3 in Fig. 1;

Fig. 4 eine teilweise geschnittene Seitenansicht eines Parallelogramm-Biegebalkens;

Fig. 5 eine Draufsicht des Biegebalkens aus Fig. 4;

Fig. 6 eine Schnittansicht entlang den Linien 6–6 in Fig. 4;

Fig. 7 einen Biegekraftaufnehmer mit zurückspringendem Krafteinleitungsarm;

Fig. 8 eine Draufsicht des Biegekraftaufnehmers aus Fig. 7 ohne Krafteinleitungsarm;

Fig. 9 ein Schaubild des Dehnungsverlaufes über die Länge des Biegekraftaufnehmers aus Fig. 7 und 8 und

Fig. 10 eine vergrösserte Schnittansicht entlang der Linie 10–10 in Fig. 7.

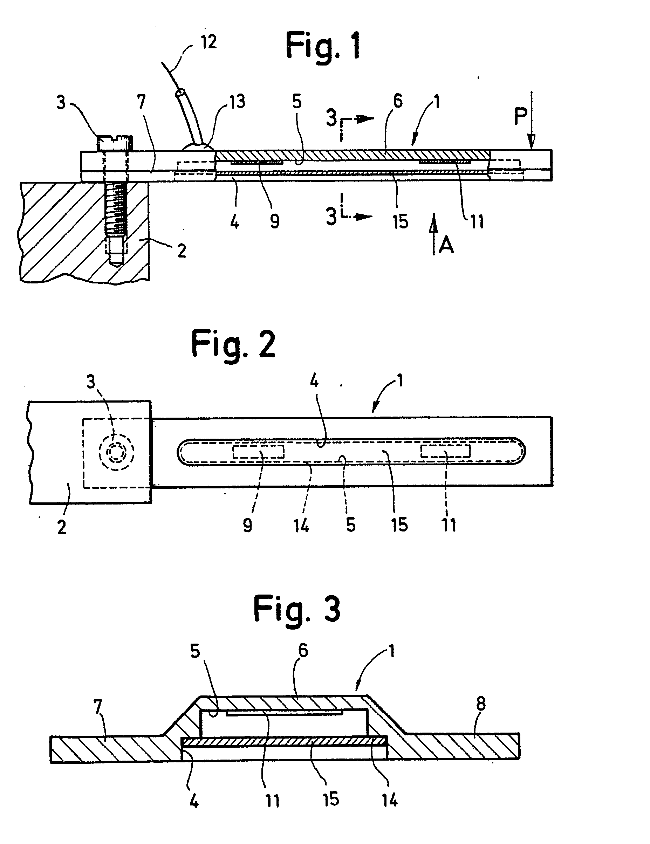

Der in Fig. 1 bis 3 dargestellte, elektromechanische Biegekraftaufnehmer umfasst einen stabförmigen Biegekörper 1, der einseitig auf einer ortsfesten Unterlage 2 mittels einer Schraube 3 befestigt und an seinem freien Ende durch eine zu messende Kraft P beaufschlagbar ist. Der Biegekörper 1 hat eine besondere Querschnittsform, die am besten aus Fig. 3 ersichtlich ist. Wie dargestellt, erstreckt sich entlang der Mittellinie des Biegekörpers 1 und über einen wesentlichen Teil von dessen Längsausdehnung hinweg eine abgestufte, nutenförmige Aussparung 4, deren Boden 5 sich in einem gegenüber dem übrigen Biegekörper hochgezogenen Teil 6 dieses Körpers befindet. Seitlich vom Teil 6 verlaufen zwei Schenkel 7, 8 ebenfalls in Längsrichtung des Biegekörpers 1. Die Nut 4, die bei der dargestellten Ausführungsform sich lediglich über den mittleren Teil des Biegekörpers 1 erstreckt, könnte auch über die ganze Länge des Biegekörpers durchgehend ausgebildet sein. In diesem Falle muss die Nut an den beiden Stirnseiten des Biegekörpers durch besondere Abdichtmittel in an sich bekannter Weise verschlossen werden.

An der Bodenwand 5 der sich bei der dargestellten Ausführungsform nach unten öffnenden, nutenförmigen Aussparung 4 sind zwei Dehnungsmessstreifen 9, 11 befestigt. Die Dehnungsmessstreifen 9, 11 sind in an sich bekannter Weise miteinander verdrahtet, wobei eine in Fig. 1 nur schematisch angedeutete, mit den Dehnungsmessstreifen verbundene Messleitung 12 durch eine Abdichtmasse 13 hindurch in ebenfalls bekannter Weise aus dem Biegekörper 1 herausgeführt ist. Die Messleitung 12 ist in üblicher Weise mit einer Auswerteeinrichtung verbunden.

Bei Belastung des Biegekörpers 1 durch eine zu messende Kraft P verbiegt sich derselbe und die Dehnungsmessstreifen 9, 11 erfahren eine entsprechende mechanische Beanspruchung, die in herkömmlicher Weise gemessen wird und ein Mass für die Kraft P darstellt.

Wie sich insbesondere aus Fig. 3 ergibt, weist die nutenförmige Aussparung 4 eine ringsum verlaufende Schulter oder Stufe 14 auf. Die in Fig. 1 und 3 nach unten gekehrte Begrenzungsebene dieser Stufe 14 liegt in der biegeneutralen Zone des Körpers 1, d.h., sie erfährt bei einer Verbiegung des Körpers 1 praktisch keine Dehnung oder Stauchung. Auf der im Bereich dieser neutralen Zone angeordneten Stufe 14 ist eine Abdeckfolie 15 durch Verklebung, Verlötung, Verschweissung oder dergleichen befestigt, welche den darunter liegenden, die Dehnungsmessstreifen 9, 11 enthaltenden Raum der Aussparung 4 hermetisch abdichtet und diese Dehnungsmessstreifen daher vor Umwelteinflüssen schützt. Da sich damit auch die Folie 15 im Bereich der biegeneutralen Zone befindet, kann sie das Biegeverhalten des Messkörpers 1 und der an ihm befestigten Dehnungsmessstreifen 9, 11 praktisch nicht beeinflussen.

Die Abdeckfolie 15 wird im Hinblick auf gleiches Temperaturverhalten vorzugsweise aus dem gleichen Werkstoff wie der Biegekörper 1, insbesondere aus Metall, hergestellt. Falls erwünscht, kann der von der Folie 15 hermetisch abgedichtete, die Dehnungsmessstreifen 9, 11 enthaltende Raum auch mit einem inerten Schutzgas gefüllt werden. Weiterhin ist es möglich, in dem von der Folie 15

hermetisch abgeschlossenen, die Dehnungs-messstreifen enthaltenden Raum auch gleichzei-tig noch Abgleichelemente, z.B. in Gestalt von elektrischen Widerständen anzuordnen, die dann ebenfalls durch die Folie 15 gegenüber Umwelteinflüssen geschützt sind. Eine solche Anordnung von Abgleichelementen in dem von der Folie 15 abgedeckten Raum ist insbesondere bei den nachfolgenden noch zu beschreibenden Ausführungsformen der Erfindung vorteilhaft, bei denen die Dehnungsmessstreifen Teile einer Brückenschaltung sind und die Abgleichelemente dem Abgleich des Brückennullpunktes dienen. Um Störeinflüsse auf die Biegespannung möglichst völlig auszuschliessen, sollte die Abdeckfolie 15 ferner möglichst dünn sein und einen möglichst kleinen Elastizitätsmodul aufweisen.

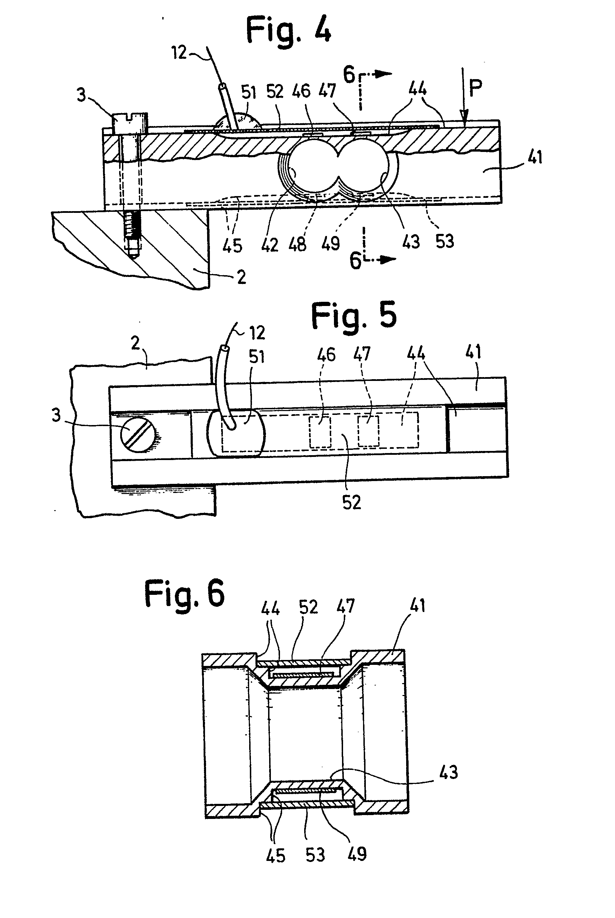

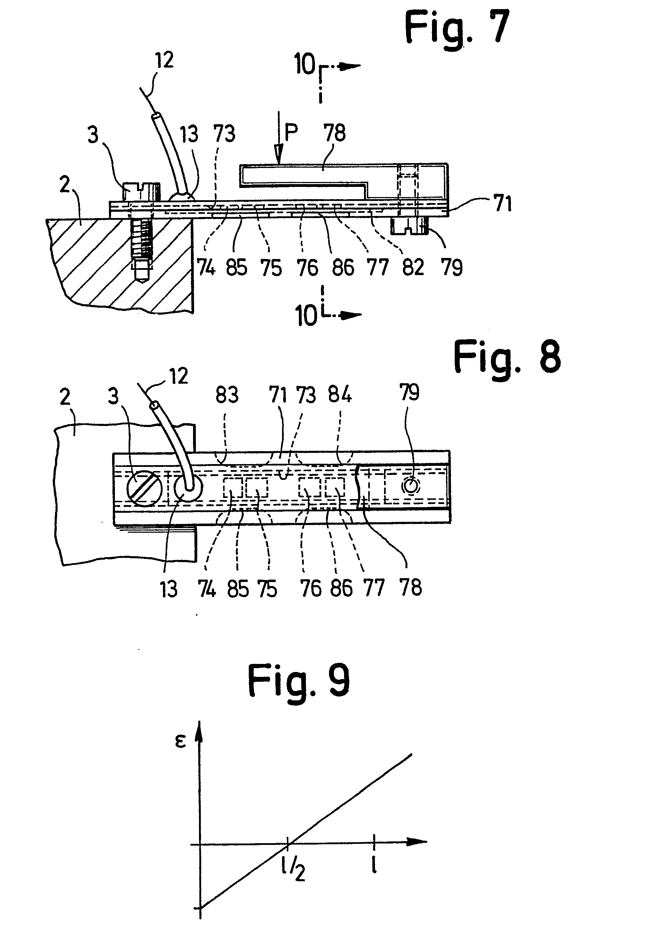

Die Fig. 4 bis 6 zeigen einen unter Verwendung zweier Biegekörper gemäss Fig. 1 bis 3 herge-stellten, sogenannten Parallelogramm-Biegebal-ken. Die beiden einzelnen Biegekörper entstehen dadurch, dass man aus einem zunächst massiven, stabförmigen Körper 41, der wiederum vorzugsweise aus Metall besteht, Material durch Einbringen zweier durchgehender Bohrungen oder Ausfräsungen 42, 43 herausnimmt. Die Längsquer-schnittsform dieser Bohrungen oder Ausfräsun-gen ist aus Fig. 6 ersichtlich. Wie ebenfalls am besten aus dieser Figur hervorgeht, sind an Ober- und Unterseite des Körpers 41 durch längsseitiges Ausfräsen nutenförmige Aussparungen 44, 45 entsprechend der Aussparung 4 in Fig. 1 bis 3 eingebracht. Die aus Fig. 6 ersichtliche Querschnittsform des Körpers 41 entspricht daher im Bereich der Bohrungen oder Ausfräsungen 42, 43 im wesentlichen der in Fig. 3 dargestellten Querschnittsform des Biegekörpers 1, wobei jedoch bei dem Biegebalken gemäss Fig. 4–6 zwei «Biegekörper» vorhanden sind, welche durch die massiven Teile des Körpers 41 miteinander verbunden sind. Die am besten aus Fig. 4 ersichtlichen Bereiche, in denen die Wand zwischen den Nuten 44, 45 und den Bohrungen oder Ausfräsungen 42, 43 am dünnsten ist, bilden Gelenkstellen und ermöglichen eine parallelogrammartige Bewegung der diese Bereiche verbindenden Teile des Körpers 41. An den genannten, dünnen Bereichen sind jeweils Dehnungsmessstreifen 46, 47 bzw. 48. 49 angeordnet, welche bei Belastung des Körpers 41 durch eine Messkraft P mechanisch beansprucht werden und ein auswertbares, elektrisches Messsignal liefern. Die Dehnungsmessstreifen 46, 47, 48, 49 sind wiederum in herkömmlicher (nicht dargestellter) Weise miteinander verdrahtet und zu einer Brückenschaltung zusammengeschlossen. Die Messleitung 12 ist durch eine z.B. als Glas-durchführung 51 ausgebildete Abdichtung heraus-geführt.

Aufgrund der Ausfräsungen 42, 43 und der Ein-bringung der stufenförmigen, nutenförmigen Aus-sparungen 44, 45 an Ober- bzw. Unterseite des Körpers 41 kann an diesen Seiten jeweils eine Abdeckfolie 52 bzw. 53 in der biegeneutralen Zone – entsprechend der Ausführungsform gemäss Fig. 1 bis 3 – aufgebracht werden, welche die Dehnungsmessstreifen 46, 47, 48, 49 gegenüber Um-welteinflüssen, insbesondere Feuchtigkeit, her-metisch abdichtet.

Die Abdeckfolien 52, 53 liegen zwar nur in den Schnittebenen entlang der Linien 6–6 in der biegeneutralen Zone, da jedoch einerseits die als Wandlerelemente dienenden Dehnungsmessstreifen 46, 47, 48, 49 verhältnismässig schmal ausgebildet werden können und andererseits die Dehnung ausserhalb der oben erwähnten, als Gelenkstellen dienenden, dünnwandigen Bereiche stark abnimmt, entsteht hierdurch keine die Messung störende Beeinflussung.

Bei einer weiteren Ausführungsform eines Biegekraftaufnehmers, gemäss Fig. 7 bis 10 ist ein Biegekörper 71 vorgesehen, dessen Querschnittsform im wesentlichen derjenigen des in Fig. 1 bis 3 dargestellten Biegekörpers 1 entspricht. An der Bodenwand 72 einer nach unten hin offenen Nut 73 sind vier mit der Messleitung 12 verbundene Dehnungsmessstreifen 74, 75, 76 und 77 befestigt. Um bei der Ausführungsform gemäss Fig. 7 bis 10 zwecks Ausbildung einer einfachen Brücken-schaltung aus vier Dehnungsmessstreifen Berei-che mit positiver und negativer Dehnung (Dehnung und Stauchung) am Biegekörper 71 auszubilden, wird die Messkraft P nicht unmittelbar in diesen Körper sondern in einen zurückspringenden Krafteinleitungsarm 78 («Rücksprungarm») eingeleitet, der freitragend (und zurückspringend) am freien Ende des Biegekörpers 71 durch eine Schraube 79 befestigt ist. Der Verlauf der Dehnung ε ist über die wirksame Länge I des Biegekörpers 71 hinweg in Fig. 9 dargestellt. In dem in Fig. 7 bis 9 links gelegenen Bereich erfolgt eine Stauchung (negative Dehnung ε), im Bereich zwi-schen I/2 bis zum Sockel des Armes 78 erfolgt eine (positive) Dehnung ε. Derartige Biegekraftaufneh-mer mit positivem und negativem Dehnungsbereich sind beispielsweise aus der US-PS 3 341 796 an sich bekannt.

Um die am Boden der Nut 73 angeordneten Dehnungsmessstreifen 74, 75, 76, 77 gegenüber Umwelteinflüssen hermetisch abzuschliessen, ist – entsprechend den zuvor beschriebenen Ausführungsformen – auf einer in der biegeneutralen Zone gelegenen Stufe 81 der Nut 73 eine dünne Abdeckfolie 82 angeordnet, beispielsweise aufgeklebt. Damit liegt auch die Folie 82 praktisch in der Neutralzone des Biegekörpers 71 und kann dessen Biegeverhalten nicht beeinflussen.

Die Abdeckfolie erstreckt sich über die gesam-te, wirksame Länge I des Biegekörpers 71 hinweg. Wenn, wie in Fig. 7 bis 10 dargestellt, die Nut 73 an den Stirnseiten des Biegekörpers 71 durchgehend, also offen ausgebildet ist, muss an diesen Enden eine besondere Abdichtung zwischen Nut und Abdeckfolie vorgenommen werden, was bei-spielsweise durch Einbringen üblicher Abdicht-massen erfolgen kann. Alternativ kann die Nut, die im Ausführungsbeispiel gemäss Fig. 1 bis 3, sich auch lediglich über den mittleren Teil des Biegekörpers 1 erstrecken und von Anfang an an ihren Enden verschlossen sein.

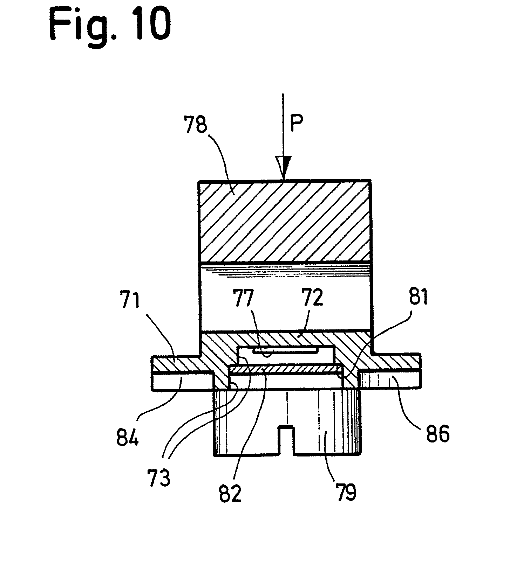

Wie weiterhin aus Fig. 8 und 10 hervorgeht, können zur Verbesserung des Biegeverhaltens des Biegekörpers 71 an dessen der Nutöffnung gegenüberliegenden Oberseite seitliche Aussparungen 83, 84, 85, 86 vorgesehen werden, vergleiche insbesondere Fig. 7, 8 und 10.

Obwohl es, wie oben festgestellt, günstig ist, auch Abgleichelemente in den von den Abdeckfolien hermetisch verschlossenen Räumen gleichzeitig mit den Wandlerelementen (Dehnungsmessstreifen) unterzubringen, kann es bei anderen Ausführungsformen der Erfindung auch günstig sein, diese Abgleichelemente auch ganz oder teilweise ausserhalb der Abdeckfolie anzuordnen oder die Abdeckfolie zunächst lediglich über die Dehnungsmessstreifen aufzubringen und erst anschliessend, nach erfolgtem Abgleich auch noch die Abgleichelemente zu überdecken.

## Patentansprüche

1. Elektromechanischer Biegekraftaufnehmer, insbesondere für Wägezellen, mit wenigstens einem elektromechanischen Wandlerelement in Gestalt eines Dehnungsmessstreifens (9, 11), der in einer nutenförmigen Aussparung eines mit der zu messenden Kraft belastbaren, vorzugsweise stabförmigen Biegekörpers (1) angeordnet und gegen Umwelteinflüsse durch eine hermetische Abdeckung geschützt ist, dadurch gekennzeichnet, dass der oder die Dehnungsmessstreifen durch eine in der biegeneutralen Zone liegende Folie (15) hermetisch abgedeckt sind.

2. Biegekraftaufnehmer nach Anspruch 1, dadurch gekennzeichnet, dass zwei im wesentlichen stabförmige Biegekörper mit in nutenförmigen Aussparungen (44, 45) angeordneten Dehnungsmessstreifen (46, 47, 48, 49) und in der biegeneutralen Zone liegenden Abdeckfolien (52, 53) zu einem Parallelogramm-Biegekraftaufnehmer zusammengeschlossen sind.

3. Biegekraftaufnehmer nach Anspruch 1, dadurch gekennzeichnet, dass ein Biegekörper (71) mit in einer Nut (73) angeordneten Dehnungsmessstreifen (74, 75, 76, 77) und in der biegeneutralen Zone liegender Abdeckfolie (82) zwecks Erzielung positiver und negativer Dehnungsbereiche über einen zurückspringenden Arm (78) mit der Messkraft (P) belastbar ist.

4. Biegekraftaufnehmer nach Anspruch 1, 2 oder 3, dadurch gekennzeichnet, dass die Abdeckfolie (15; 52, 53; 82) aus dem gleichen Werkstoff wie der Biegekörper (1, 41, 71) besteht.

5. Biegekraftaufnehmer nach Anspruch 4, dadurch gekennzeichnet, dass der Biegekörper (1, 41, 71) und die Abdeckfolie (15; 52, 53; 82) aus Metall bestehen.

6. Biegekraftaufnehmer nach einem der Ansprüche 1 bis 5, dadurch gekennzeichnet, dass der Biegekörper (1, 41, 71) einen stufenförmigen Querschnitt besitzt und die Abdeckfolie (15; 52, 53; 82) auf einer ebenen Stufenfläche (14) mit dem Biegekörper hermetisch dicht verklebt, verlötet oder verschweisst ist.

7. Biegekraftaufnehmer nach einem der voranstehenden Ansprüche, dadurch gekennzeichnet, dass die von der Abdeckfolie (15; 52, 53; 82) hermetisch verschlossene Aussparung (4; 44, 45; 73) mit einem Schutzgas gefüllt ist.

8. Biegekraftaufnehmer nach einem der voranstehenden Ansprüche, dadurch gekennzeichnet, dass Abgleichelemente für eine den Dehnungsmessstreifen (46, 47, 48, 49; 74, 75, 76, 77) zugeordnete Brückenschaltung ebenfalls in der durch die Abdeckfolie (52, 53; 82) hermetisch verschlossenen Aussparung (44, 45; 73) angeordnet sind.

## Claims

1. Electromechanical bending force recorder, particularly for weighing cells, having at least one electromechanical converter element in the form of an extensometer strip (9, 11) which is located in a slot-like recess in a preferably bar-shaped bending body (1) to which the force to be measured can be applied and which is protected against environmental influences by an hermetic covering, charcterised in that the extensometer strip(s) is or are hermetically enclosed by a film (15) located in the bending-neutral zone.

2. Bending force recorder according to Claim 1, characterised in that two substantially bar-shaped bending members with extensometer strips (46, 47, 48, 49) disposed in slot-like recesses (44, 45) and covering films (52, 53) located in the bending-neutral zone are combined into one parallelogram-bending force recorder.

3. Bending force recorder according to Claim 1, characterised in that a bending member (71) with extensometer strips (74, 75, 76, 77) disposed in a slot (73) and covering film (82) located in the bending-neutral zone can, to achieve positive and negative extension ranges, be loaded with the force (P) to be measured, over a retroprojecting arm (78).

4. Bending force recorder according to Claim 1, 2 or 3, characterised in that the covering film (15; 52, 53; 82) consists of the same material as the bending member (1, 41, 71).

5. Bending force recorder according to Claim 4, characterised in that the bending member (1, 41, 71) and the covering film (15; 52, 53; 82) consist of metal.

6. Bending force recorder according to Claims 1 to 5, characterised in that the bending member (1, 41, 71) has a step-like cross-section and in that the covering film (15; 52, 53; 82) is glued, soldered or welded in hermetically tight fashion to the bending member on a plane stepped surface (14).

7. Bending force recorder according to one of the proceding Claims, characterised in that the recess (4; 44, 45; 73) which is hermetically sealed by the covering film (15; 52, 53; 82) is filled with a barrier gas.

8. Bending force recorder according to one of the preceding Claims, characterised in that equalising elements for a bridge circuit associated with the extensometer strips (46, 47, 48, 49; 74, 75, 76, 77) are likewise disposed in the recesses (44, 45; 73) which is hermetically seales by the covering film (52, 53; 82).

## Revendications

1. Capteur électromécanique de force de flexion, en particulier pour cellules de pesée, comprenant au moins un élément transducteur électromécanique sous forme d'une jauge d'extensométrie (9, 11) qui est disposée dans un évidement en forme de rainure d'un corps d'épreuve travaillant en flexion (1), de préférence en forme de barreau, auquel est appliquée la force à mesurer, et qui est protégée par un recouvrement hermétique contre les influences de l'environnement, caractérisé en ce que la jauge ou les jauges est ou sont recouverte(s) hermétiquement par une feuille (15) située dans la zone neutre en flexion.

2. Capteur selon la revendication 1, caractérisé en ce qu'il comprend deux corps d'épreuve travaillant en flexion, essentiellement en forme de barreaux, avec des jauges (46, 47, 48, 49) placées dans des évidements en forme de rainure (44, 45) et avec des feuilles de recouvrement (52, 53) situées dans la zone neutre en flexion, qui sont réunis pour former un capteur de force de flexion en parallèlogramme.

3. Capteur selon la revendication 1, caractérisé en ce qu'il comprend un corps d'épreuve travaillant en flexion (71), avec des jauges (74, 75, 76, 77) placées dans une rainure (73) et avec une feuille de recouvrement (82) située dans la zone neutre en flexion, qui est chargé par la force (P) à mesurer par l'intermédiaire d'un bras (78) disposé en retrait, en vue de l'obtention d'une région d'allongement positif et d'une région d'allongement négatif (région de compression).

4. Capteur selon la revendication 1, 2 ou 3, caractérisé en ce que la feuille de recouvrement (15; 52, 53; 82) est formée du même matériau que le corps d'épreuve (1, 41, 71).

5. Capteur selon la revendication 4, caractérisé en ce que le corps d'épreuve (1, 41, 71) et la feuille de recouvrement (15; 52, 53; 82) sont en métal.

6. Capteur selon une des revendications 1 à 5, caractérisé en ce que le corps d'épreuve (1, 41, 71) possède une section droite étagée et la feuille de recouvrement (15; 52, 53; 82) est collée, brasée ou soudée étanche au corps d'épreuve sur une surface plane formée par un gradin (14).

7. Capteur selon une des revendications précédentes, caractérisé en ce que l'évidement (4; 44, 45; 73) fermé hermétiquement par la feuille de recouvrement (15; 52, 53; 82) est rempli de gaz protecteur.

8. Capteur selon une des revendications précédentes, caractérisé en ce que des éléments d'ajustement pour un montage en pont des jauges (46, 47, 48, 49; 74, 75, 76, 77) sont disposés également dans l'évidement (44, 45; 73) fermé hermétiquement par la feuille de recouvrement (52, 53; 82).

# Fig. 1

# Fig. 2

# Fig. 3

# Fig. 4

# Fig. 5

# Fig. 6

# Fig. 7

# Fig. 8

# Fig. 9

# Fig. 10